# EUROPÄISCHE PATENTANMELDUNG

(11) **EP 4 119 294 A1**
(43) Veröffentlichungstag der Anmeldung: **18.01.2023**
(21) Anmeldenummer: 22183253.8
(22) Anmeldetag: 06.07.2022
(51) Int. Cl.: B24C 1/04, B24C 3/32, B24C 5/00, H01M 4/04, B24C 9/00, B24C 3/10

(54) **VERFAHREN UND SCHNEIDVORRICHTUNG ZUM SCHNEIDEN VON ELEKTRODENFOLIEN**

(30) Priorität: 16.07.2021 DE 102021118458
(71) Anmelder: VOLKSWAGEN AG, 38440 Wolfsburg (DE)
(72) Erfinder: Jamadar, Kartik, 38442 Wolfsburg (DE); Gangurde, Priyanka, 422006 Nashik (IN)
(74) Vertreter: karo IP

(57) **Zusammenfassung**

Es wird ein Verfahren zum Schneiden von Elektrodenfolien (1) durch einen Partikelstrom (2) vorgeschlagen. Weiter wird eine Schneidvorrichtung (4) zum Schneiden von Elektrodenfolien (1), die für einen Einsatz in einer Batteriezelle vorgesehen sind, angegeben, zumindest umfassend eine Düse (5) mit einem Auslass (6), ein Schneidwerkzeug (7), eine Schwingungseinrichtung (8) zur Anregung zumindest des Schneidwerkzeugs (7) zu Schwingungen (14), eine Partikelzuleitung (9) zur Zuleitung zumindest von Partikeln (13), eine Gaszuleitung (10) zur Zuleitung eines ersten Gasstroms (12), wobei die Partikel (13) und der erste Gasstrom (12) in der Schneidvorrichtung (4) zu einem Partikelstrom (2) mischbar und über die Düse (5) dem Auslass (6) zuführbar sind, wobei das Schneidwerkzeug (7) und der Auslass (5) über der Elektrodenfolie (1) in einem Abstand (11) zu einer Oberfläche (3) der Elektrodenfolie (1) anordenbar und die Elektrodenfolie (1) zumindest durch den Partikelstrom (2) und durch die Schwingungen (14) des Schneidwerkzeugs (7) trennbar ist.

## Beschreibung

Die Erfindung betrifft ein Verfahren und eine Schneidvorrichtung zum Schneiden von Elektrodenfolien, insbesondere von beschichten Elektrodenfolien.

Für den Antrieb von Kraftfahrzeugen werden vermehrt Batterien, insbesondere Lithium-Ionen-Batterien eingesetzt. Batterien werden üblicherweise aus Zellen zusammengesetzt, wobei jede Zelle einen Stapel von Anoden-, Kathoden- und Separatorfolien aufweist, die ggf. in Form von Lagen bzw. Materialschichten vorliegen. Zumindest ein Teil der Anoden- und Kathodenfolien sind als elektrische Strom-Ableiter ausgeführt, zur Ableitung des von der Zelle bereitgestellten Stroms hin zu einem außerhalb der Zelle angeordneten Verbraucher. Die einzelnen Elemente eines Stapels werden im Folgenden auch als Elektroden bzw. Folien bezeichnet.

Die einzelnen Folien werden insbesondere als Endlosmaterial bereitgestellt, ggf. beschichtet, z. B. mit einem Aktivmaterial, und zumindest teilweise beschnitten. Unbeschichtete Bereiche von beschichteten Folien können als Ableiter eingesetzt werden.

Beim Schneiden von Elektroden werden folgende Schnitte durchgeführt:
- Schlitzen: Die Schnittlinie verläuft entlang der Erstreckung (x-Richtung) des Endlosmaterials zur Aufteilung des breiten Ausgangsmaterials in mehrere weniger breite Streifen Endlosmaterial;
- Ausklinken: mit der Schnittlinie werden die Ableiter aus dem Endlosmaterial herausgebildet; die Schnittlinien verlaufen längs und quer zur Erstreckung des Endlosmaterials;
- Abtrennen: die Schnittlinie verläuft quer zur Erstreckung des Endlosmaterials; durch das Abtrennen werden die Elektrodenfolien von dem Endlosmaterial abgeschnitten und die einzelnen Lagen des Stapels gebildet.

Der aktuelle Stand der Technik beim Schneiden von Lithium-Ionen-Batterie-Elektroden nutzt das Scherprinzip, bei dem ein oberes Messer (oberhalb einer zu schneidenden Lage) in Kontakt mit einem unteren Messer (unterhalb einer zu schneidenden Lage) kommt. Der Kontakt führt zu einer hohen Reibung und damit zu schnellerem Werkzeugverschleiß. Das Schlitzen mit hohen Geschwindigkeiten vergrößert dieses Problem. Deshalb ist derzeit die Schneidgeschwindigkeit auf maximal 120 m/min [Meter/Minute] begrenzt.

Das Schlitzen wird insbesondere durch obere und untere Kreismesser aus Wolframkarbid ausgeführt. Diese Messer müssen etwa nach 200 km [Kilometer] Schnittlinie nachgeschliffen werden. Ein so häufiges Nachschleifen der Messer verursacht hohe Betriebskosten.

Das Ausklinken und das Abtrennen werden insbesondere als separate Arbeitsgänge nach dem Schlitzen durchgeführt. Dies geschieht entweder mechanisch oder per Laser. Aufgrund der separaten Maschinen für das Schlitzen und Ausklinken ist ein höherer Investitions- und Platzbedarf erforderlich.

Das Laserschneiden ist ein energieintensiver Prozess (~ 6 kW [Kilowatt] Leistungsbedarf der Anlage) und erzeugt eine Wärmeeinflusszone. Das Aktivmaterial der beschichteten Elektrode in der hitzebeeinflussten Zone wird verbrannt, wodurch die Batteriekapazität verringert wird. Der Laserprozess ist zudem ineffizient, weil die meisten der konzentrierten Lichtstrahlen von der Kupfer- bzw. Aluminiumoberfläche der Elektrode reflektiert werden. Man benötigt insbesondere einen speziellen grünen Laser, um eine bessere Lichtadsorption zu erreichen. Dieser Lasertyp ist allerdings teuer und erlaubt keine höheren Geschwindigkeiten als 80 m/min.

Mechanisches Ausklinken hat einen hohen Werkzeugverschleiß. Außerdem muss der Vorschub der Elektroden in regelmäßigen Abständen angehalten werden, um den Prozessschritt auszuführen. Dies führt zu reduzierten Schnittgeschwindigkeiten. Die Bewegung der Elektrode in z-Richtung (Dickenrichtung) während des Schlitzvorgangs verursacht eine Welligkeit an der Schlitzkante bzw. Schnittlinie. Eine Kontrolle dieser Welligkeit ist nicht möglich, da kein Gegenwerkzeug vorhanden ist.

Eine Begrenzung der Elektrodenbewegung in y-Richtung (Breitenrichtung) ist insbesondere nicht vorgesehen. Dies führt zu einer Welligkeit in y-Richtung.

Durch das Fehlen einer Gegenkraft beim Schlitzen und mechanischen Ausklinken kann es zu einer Gratbildung kommen. Dadurch kann insbesondere ein Kurzschluss in der Batteriezelle entstehen. Aktivmaterial der geschnittenen Elektrode kann an den Schneidkanten hängenbleiben. Dies erfordert eine umfangreiche Reinigung der Schneidkante und auch des Messers. Das Anhaften von Partikeln an den Schneidkanten, die größer als 10 µm [Mikrometer] sind, kann ebenfalls einen Kurzschluss in der Batteriezelle verursachen.

Kurz gesagt, das Schneiden mit dem Werkzeug (mechanisches Schneiden) und/oder das Schneiden mit Energie (Laser) kann dazu führen, dass die Schnittgeschwindigkeit beeinträchtigt, die Kosten erhöht, die Batteriekapazität verringert und/oder die Sicherheit der Batteriezelle reduziert ist.

Diese Nachteile könnten wie folgt reduziert werden:
- ausgiebiges Reinigen der Schneide beim Schneiden mit einer Lösung aus Alkohol und Paraffinöl;
- Reinigen der Schneidkante beim mechanischen Schneiden durch berührende und berührungslose Reinigung; bei der berührungslosen Reinigung wird ionisierte Luft auf die Schneidkante geblasen, um die statische Aufladung auf nichtleitenden Partikeln zu neutralisieren; derartig neutralisierte Partikel können dann abgeblasen oder abgesaugt werden;
- Verwendung eines grünen Lasers, weil dieser die geringste Reflexion von der metallischen Oberfläche der Elektrode hat;
- Verringerung der Schnittgeschwindigkeit, so dass der Werkzeugverschleiß reduziert werden kann;
- Aufweichung der Toleranz der Schneidkante (hinsichtlich zulässiger Gratgröße und Partikelanhaftung), wodurch allerdings die Batteriesicherheit tatsächlich verringert wird.

Die Hauptnachteile bekannter, im Einsatz befindlicher Anlagen sind wie folgt:
- ein hoher Verschleiß des Schlitzmessers; es muss alle 200 km nachgeschliffen werden; Wolframkarbid und andere Hartmetalle sowie Keramik als Werkzeugmaterial reduzieren diese Verschleißrate, sind aber sehr teuer;
- eine umfangreiche Reinigungsstation ist beim Schneiden erforderlich; ggf. ist eine Elektrodenreinigungsstation nach dem Schlitzen und Laserschneiden erforderlich, um Partikelverunreinigungen von der Elektrode zu entfernen; dies erhöht die Kosten, die Zykluszeit und/oder den Platzbedarf der Maschine;
- das mechanische Längsteilen (Schlitzen) ist sehr empfindlich gegenüber Schnittparametern wie Schnittwinkel, Schnittgeschwindigkeit, Kraft zwischen Ober- und Untermesser, Rauheit der Messeroberfläche und Maschinenvibration; geringfügige Änderungen führen zu Gratbildung und zusätzlicher Partikelkontamination;
- für das kontinuierliche Ausklinken und Abtrennen gibt es derzeit keine realisierbare Lösung; das bedeutet, dass während des Ausklinkens und Abtrennens die Elektrodenbewegung vorübergehend angehalten wird; dies reduziert die Geschwindigkeit des Ausklinkens und Abtrennens; die maximale Geschwindigkeit beim Ausklinken und Abtrennen beträgt 60 m/min.

Es sind die folgenden Techniken bekannt, um einige der genannten Nachteile zu überwinden:
- Verwendung von hartem Material wie chromreichem Stahl, Keramik und Wolframkarbid als Werkzeugmaterial, um den Verschleiß zu reduzieren;
- der kleinste Radius beim Ausklinken wird auf 2 mm [Millimeter] eingestellt; es ist nicht möglich, einen kleineren Radius zwischen zwei Schneidkanten zu realisieren (am Schnittpunkt von Längs- und Querschnitt);
- eine kontinuierliche Bewegung der Elektrode während des Ausklinkens und des Abtrennens kann nur bei wenigen Fertigungsspezialisten ausgeführt werden; das bedeutet, dass die Laserpistole während des Schneidens in einem Winkel fährt, so dass der endgültige Beschneidungsschnitt "perfekt" gerade ist; dies erfordert eine sehr präzise Steuerung des Verfahrwegs der Laserpistole und der Elektrodenbewegung;
- Verwendung verschiedener Schneidprinzipien wie Rotationsschneiden zum Schlitzen und Ausklinken; beim Rotationsschnitt ist die Qualität des Querschnitts im Vergleich zum Längsschnitt schlechter;
- Verwendung eines grünen Lasers und hoher Leistung (6 kW) zum Schneiden der Anode;
- beim Laserschneiden der Elektrode wird eine Kühlplatte verwendet, um eine schnelle Abkühlung zu erreichen und die Wärmeeinflusszone zu reduzieren.

Im Ergebnis bedeutet das, dass das Schneiden der Batterieelektrode mit mechanischen Werkzeugen oder mit Energie (Laser) immer noch ein fehlerbehafteter, toleranzreicher, kostenintensiver und/oder unzuverlässiger Prozess ist.

Aus der US 6,379,858 B1 ist eine Vorrichtung zur Bearbeitung von Oberflächen durch Honen bekannt. Dabei wird ein Honmittel über einen Schalltrichter auf eine Oberfläche des zu bearbeitenden Materials geschleudert. Alternativ wird das Honmittel auf der Oberfläche angeordnet und ein Werkzeug wird zu Schwingungen angeregt und kontaktiert über das Honmittel die Oberfläche.

Aus der DE 2 329 932 A2 ist ein Verfahren zum Herstellen von Paneelen mit einer Sonotrode als Bearbeitungswerkzeug bekannt.

Aus der JP 2009-274181 A ist eine Poliervorrichtung zur Bearbeitung von Oberflächen bekannt. Dabei wird eine Düse, über die ein Poliermittel auf die Oberfläche aufgebracht wird, zu Schwingungen angeregt.

Aufgabe der vorliegenden Erfindung ist es, die mit Bezug auf den Stand der Technik angeführten Probleme zumindest teilweise zu lösen. Insbesondere soll ein Verfahren und eine Schneidvorrichtung zum Schneiden von Elektrodenfolien vorgeschlagen werden, durch die ein qualitativ hochwertiger Schnitt mit hoher Geschwindigkeit und bei möglichst geringem Verschleiß durchgeführt werden kann.

Zur Lösung dieser Aufgaben trägt ein Verfahren und eine Schneidvorrichtung mit den Merkmalen der unabhängigen Patentansprüche bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Hierzu trägt das nachfolgend erläuterte Verfahren zum Schneiden von Elektrodenfolien bei. Die Elektrodenfolien sind insbesondere für einen Einsatz in einer Batteriezelle vorgesehen bzw. vorbestimmt. Das Verfahren wird mit mindestens einer Schneidvorrichtung ausgeführt. Die Schneidvorrichtung umfasst zumindest folgende Komponenten: eine Düse mit einem Auslass, ein Schneidwerkzeug, eine Schwingungseinrichtung, eine Partikelzuleitung und eine Gaszuleitung. Das Schneiden erfolgt durch einen Partikelstrom, also durch das Beaufschlagen der Elektrodenfolie mit dem Partikelstrom. Das Schneiden erfolgt zusätzlich durch eine Schwingung des Schneidwerkzeugs, wobei das Schneidwerkzeug über mindestens ein Partikel des Partikelstromes, das zwischen dem Schneidwerkzeug und der Elektrodenfolie angeordnet ist, die Elektrodenfolie kontaktiert.

Das Verfahren weist zumindest die folgenden Schritte auf:
a) Bereitstellen einer Elektrodenfolie mit einer Oberfläche;
b) Anordnen des Auslasses über der Elektrodenfolie in einem Abstand zu der Oberfläche;
c) Einleiten eines ersten Gasstroms aus der Gaszuleitung in die Schneidvorrichtung,
d) Einleiten zumindest von Partikeln aus der Partikelzuleitung in die Schneidvorrichtung,
e) Mischen des ersten Gasstroms und zumindest der Partikel in der Schneidvorrichtung zu dem Partikelstrom;
f) Anregen zumindest des Schneidwerkzeugs oder zusätzlich der Düse zu Schwingungen durch die Schwingungseinrichtung;
g) Beaufschlagen der Elektrodenfolie mit dem aus dem Auslass austretenden Partikelstrom, so dass die Elektrodenfolie getrennt wird; und
h) Beaufschlagen der Elektrodenfolie mit den Schwingungen des Schneidwerkzeugs über mindestens ein Partikel, das zwischen dem Schneidwerkzeug und der Elektrodenfolie angeordnet ist, so dass die Elektrodenfolie getrennt wird.

Die obige (nicht abschließende) Einteilung der Verfahrensschritte in a) bis h) soll vorrangig nur zur Unterscheidung dienen und keine Reihenfolge und/oder Abhängigkeit erzwingen. Auch die Häufigkeit der Verfahrensschritte kann variieren. Ebenso ist möglich, dass Verfahrensschritte einander zumindest teilweise zeitlich überlagern. Ganz besonders bevorzugt finden die Schritte c) bis h) zumindest zeitweise zeitlich parallel zueinander statt. Schritte c) bis h) erfolgen insbesondere nach den Schritten a) und b).

Eine Batteriezelle umfasst insbesondere ein, ein Volumen umschließendes Gehäuse und in dem Volumen angeordnet mindestens eine erste Elektrodenfolie einer ersten Elektrodenart, eine zweite Elektrodenfolie einer zweiten Elektrodenart und ein dazwischen angeordnetes Separatormaterial sowie einen Elektrolyten, z. B. einen flüssigen oder einen festen Elektrolyten.

Die Batteriezelle ist insbesondere eine Pouchzelle (mit einem verformbaren Gehäuse bestehend aus einer Pouchfolie) oder eine prismatische Zelle (mit einem formfesten Gehäuse). Eine Pouchfolie ist ein bekanntes verformbares Gehäuseteil, dass als Gehäuse für sogenannte Pouchzellen eingesetzt wird. Es handelt sich dabei um ein Kompositmaterial, z. B. umfassend einen Kunststoff und Aluminium.

Die Batteriezelle ist insbesondere eine Lithium-Ionen-Batteriezelle.

Die einzelnen Folien der Mehrzahl von Elektrodenfolien sind aufeinander angeordnet und bilden insbesondere einen Stapel. Die Elektrodenfolien sind jeweils unterschiedlichen Elektrodenarten zugeordnet, sind also als eine Anode oder eine Kathode ausgeführt. Dabei sind Anoden und Kathoden wechselweise und jeweils durch das Separatormaterial getrennt voneinander angeordnet.

Eine Batteriezelle ist ein Stromspeicher, der z. B. in einem Kraftfahrzeug zum Speichern von elektrischer Energie eingesetzt wird. Insbesondere weist z. B. ein Kraftfahrzeug eine elektrische Maschine zum Antrieb des Kraftfahrzeuges (einen Traktionsantrieb) auf, wobei die elektrische Maschine durch die in der Batteriezelle gespeicherte elektrische Energie antreibbar ist.

Gemäß Schritt a) erfolgt insbesondere ein Bereitstellen einer Elektrodenfolie mit einer Oberfläche. Die Elektrodenfolie wird insbesondere als Endlosmaterial bereitgestellt. Die Elektrodenfolie umfasst insbesondere ein Trägermaterial, insbesondere aus einem metallischen Material, dass ggf. und dabei zumindest teilweise beschichtet ausgeführt ist, z. B. mit einem Aktivmaterial. Die Elektrodenfolie weist zwei größte Seitenflächen mit einer theoretisch endlosen Länge in einer x-Richtung, eine Breite in einer y-Richtung und eine Dicke in einer z-Richtung auf. Die Erstreckung in z-Richtung ist dabei die geringste. Eine der Seitenflächen der Elektrodenfolie bildet vorliegend die Oberfläche.

Es wird eine Schneidvorrichtung bereitgestellt, zumindest umfassend eine Düse mit einem Auslass, ein Schneidwerkzeug sowie eine Schwingungseinrichtung. Weiter erfolgt ein Anordnen des Auslasses über der Elektrodenfolie in einem Abstand zu der Oberfläche (Schritt b)). Die Düse dient der Ausrichtung des Partikelstroms auf die Oberfläche. Über den Auslass der Düse tritt der Partikelstrom aus der Schneidvorrichtung aus und strömt hin zur Oberfläche. Die Düse ist in einem derartigen Abstand von der Oberfläche angeordnet, dass kein direkter mechanischer Kontakt zwischen Düse und Oberfläche vorliegt. Das Schneidwerkzeug kann den Auslass aufweisen oder benachbart dazu angeordnet werden. Das Schneidwerkzeug wird durch die Schwingungseinrichtung zu Schwingungen angeregt.

Das Schneidwerkzeug kontaktiert die Oberfläche insbesondere nicht, bzw. nicht direkt. Insbesondere kontaktiert das Schneidwerkzeug die Oberfläche über mindestens ein Partikel, das zwischen dem Schneidwerkzeug und der Oberfläche angeordnet ist. Das Schneidwerkzeug kontaktiert also insbesondere das Partikel und bewegt das Partikel infolge der Schwingungen. Das derart angeregte Partikel erzeugt die Schneidwirkung an der Elektrodenfolie. Der Abstand zwischen Schneidwerkzeug und Oberfläche kann also insbesondere durch einzelne Partikel überbrückt werden.

Weiter werden eine Partikelzuleitung und eine Gaszuleitung bereitgestellt. Diese Zuleitungen dienen insbesondere dem Transport der Partikel und eines ersten Gasstroms.

Gemäß Schritt c) erfolgt insbesondere ein Einleiten eines ersten Gasstroms aus der Gaszuleitung in die Schneidvorrichtung. Gemäß Schritt d) erfolgt ein Einleiten zumindest von Partikeln aus der Partikelzuleitung in die Schneidvorrichtung. Weiter erfolgt ein Mischen des ersten Gasstroms und zumindest der Partikel in der Schneidvorrichtung zu dem Partikelstrom gemäß Schritt e). Der erste Gasstrom dient insbesondere dem Transport und der Beschleunigung der Partikel, so dass diese zusammen mit dem Gasstrom, also als Partikelstrom, über die Düse hin zur Oberfläche transportiert werden.

Gemäß Schritt f) erfolgt insbesondere ein Anregen zumindest des Schneidwerkzeugs oder zusätzlich der Düse zu Schwingungen durch die Schwingungseinrichtung. Infolge der Schwingungen bewegt sich zumindest das Schneidwerkzeug insbesondere in einer zur Oberfläche senkrecht orientierten Ebene.

Gemäß Schritt g) erfolgt insbesondere ein Beaufschlagen der Elektrodenfolie mit dem aus dem Auslass austretenden Partikelstrom und ein Trennen der Elektrodenfolie. Die Elektrodenfolie wird durch das Auftreffen der Partikel auf der Oberfläche sukzessive durchtrennt. Dabei werden die Partikel insbesondere auf die Oberfläche geschleudert, so dass das Material der Oberfläche bzw. der Elektrodenfolie durch die Partikel verdrängt wird.

Gemäß Schritt h) erfolgt insbesondere ein Beaufschlagen der Elektrodenfolie mit den Schwingungen des Schneidwerkzeugs über mindestens ein Partikel, das zwischen dem Schneidwerkzeug und der Elektrodenfolie angeordnet ist, so dass die Elektrodenfolie getrennt wird.

Schritte g) und h) können so ausgelegt sein, dass diese jeweils (zumindest zeitweise) allein oder zusammen den (partiellen) Trennvorgang der Elektrodenfolie bewirken.

Insbesondere ist die Düse eine Sonotrode bzw. als eine Sonotrode ausgebildet, wobei der Auslass durch eine Schwingungseinrichtung zu Schwingungen angeregt wird. Infolge der Schwingungen bewegen sich der Auslass und das Schneidwerkzeug insbesondere in einer zur Oberfläche senkrecht orientierten Ebene.

Eine Sonotrode ist ein Werkzeug, das durch das Einleiten von hochfrequenten mechanischen Schwingungen (z. B. Ultraschall, aber auch geringere Frequenzen) in Resonanzschwingungen versetzt wird. Über die Sonotrode kann eine Amplitude der Anregung vergrößert werden.

Anstelle des Schlitzens und Ausklinkens mit mechanischem Schneiden (unter Verwendung des Scherprinzips durch das Schneidewerkzeug) oder durch Energie (Laser), wird hier das Schneiden durch ein mit hoher Geschwindigkeit vibrierendes Gasmedium, den ersten Gasstrom, das abrasive wirkende Partikel mit sich trägt, sowie durch ein zu Schwingungen angeregtes Schneidwerkzeug, durchgeführt. Die Schneidwirkung der Partikel bzw. des Schneidwerkzeugs kann durch die hochfrequente Anregung des Partikelstroms bzw. des Schneidwerkzeugs über die Sonotrode verstärkt werden.

Mit dem vorgeschlagenen Verfahren ist es insbesondere möglich, hohe Geschwindigkeiten beim Schneiden zu erzielen. Darüber hinaus gibt es einen Werkzeugverschleiß nur am Schneidwerkzeug. Weiter entstehen keine Grate an den Trennkanten und keine Wärmeeinflusszone. Das Verfahren ist insbesondere für das Schlitzen geeignet. Es lässt sich jedoch auch für das Ausklinken und Abtrennen einsetzen.

Hier wird das Schneiden durch eine Kombination zweier Wirkprinzipien durchgeführt: zum einen durch einen Wurfmechanismus (Bombardierung), zum anderen durch eine Hammerwirkung eines Hammerschlagverfahrens (*"hammering"*)*.*

Bei dem ersten Wirkprinzip, dem Wurfmechanismus, nimmt der, ggf. vibrierende, erste Gasstrom, insbesondere ein Hochgeschwindigkeits-Luftstrahl, die abrasiv wirkenden Partikel mit. Die Partikel beginnen insbesondere ebenfalls in dem ersten Gasstrom zu vibrieren. Sowohl der erste Gasstrom als auch die Partikel werden in Form eines scharfen Abrasiv-Gasmessers auf den Schneidbereich der Oberfläche geschleudert. Dabei kann der Brennpunkt des Abrasiv-Gasmessers sehr klein ausgeführt sein. Das Schneiden erfolgt insbesondere durch die kinetische und ggf. Vibrations-Energie der vom ersten Gasstrom transportierten Partikel.

Bei dem zweiten Wirkprinzip, Hammerschlagverfahren, erfolgt ein Schneiden mittels Schwingungsanregung und abrasiv wirkenden Partikeln. Dabei wird ein Abrasivmittel auf dem Schneidbereich (hier der Oberfläche) verteilt und von einem vibrierenden Schneidwerkzeug in Schwingung versetzt. Hier liegt also eine Wechselwirkung zwischen Schneidwerkzeug und Elektrodenfolie vor. Das Schneiden erfolgt hier insbesondere durch die Vibrations-Energie des Schneidwerkzeugs und durch die abrasive Wirkung der zwischen Schneidwerkzeug und Oberfläche angeordneten und vom Schneidwerkzeug bewegten Partikel. Die Partikel werden über den Gasstrom hin zum Schneidwerkzeug transportiert.

Insbesondere ist die Sonotrode mit einem Hohlraum ausgeführt und der Partikelstrom wird über den Hohlraum dem Auslass zugeführt.

Insbesondere ist der Auslass der Düse an dem Schneidwerkzeug ausgebildet. Insbesondere tritt also der Partikelstrom aus dem, an der Spitze des Schneidwerkzeugs angeordneten Auslass aus. Das Schneidwerkzeug ist also insbesondere hohl ausgeführt und insbesondere mit dem Hohlraum der Sonotrode verbunden. Der Partikelstrom wird über den Hohlraum in der Sonotrode und das hohle Schneidwerkzeug hin zu der Oberfläche geleitet. Die Spitze des Schneidwerkzeugs ist hin zu der Oberfläche der Elektrodenfolie orientiert und ist der Oberfläche am nächsten angeordnet. Das Schneidwerkzeug erstreckt sich also ausgehend von der Spitze weg von der Oberfläche.

Insbesondere ist der Auslass benachbart zu dem Schneidwerkzeug ausgebildet. Insbesondere wird der Partikelstrom über den Hohlraum der Sonotrode geleitet und dann in einen, benachbart zu dem Schneidwerkzeug angeordneten Zuführbereich überführt. Über den Zuführbereich wird der Partikelstrom hin zu dem Schneidbereich geführt. Das Schneidwerkzeug ist insbesondere als Massivteil ausgeführt, d. h. nicht hohl. Der Zuführbereich ist insbesondere mit der Sonotrode verbunden und wird durch die Sonotrode mit angeregt.

Insbesondere weist zumindest
- die Schwingung eine Amplitude, insbesondere am Auslass, von höchstens 80 Mikrometer, bevorzugt von höchstens 60 Mikrometer oder von höchstens 50 Mikrometer; oder
- die Frequenz der Schwingung zwischen 5 kHz [Kilohertz] und 50 kHz, bevorzugt zwischen 10 kHz und 25 kHz; oder
- der Auslass einen Durchmesser bzw. eine größte Weite von bis zu 1,0 Millimeter, insbesondere von 0,2 bis 0,8 Millimetern, bevorzugt von 0,4 bis 0,6 Millimetern, auf.

Insbesondere weist das Schneidwerkzeug eine der Elektrodenfolie zugewandte, geschlossen ausgeführte Spitze mit einer kleinsten Breite von 0,2 bis 1,5 Millimetern, bevorzugt von 0,5 bis 1,2 Millimetern, auf. Eine den Auslass aufweisende, offen ausgeführte Spitze weist insbesondere eine kleinste Breite von höchstens 2 Millimetern auf. Die kleinste Breite ist insbesondere die kleinste Erstreckung der Breite. Ist z. B. die Sonotrode bzw. die Düse rechteckig ausgeführt, erstreckt sich die Spitze parallel zu der Oberfläche der Elektrodenfolie entlang einer Länge. Diese sehr viel größere Länge ist also gerade nicht als die Breite zu verstehen.

Die Schwingungseinrichtung umfasst bevorzugt einen Wandler (piezoelektrisch oder magnetostriktiv), auf den ein hochfrequentes elektrisches Signal übertragen wird. Der Wandler wandelt das elektrische Signal in niederfrequente mechanische Schwingungen mit geringer Amplitude um. Im Wesentlichen wandelt der Wandler also elektrische Energie in mechanische Schwingungen um. Diese mechanische Schwingung wird dann an die hohle Sonotrode weitergegeben.

Die mechanischen Schwingungen im Bereich des Wandlers haben eine geringe Amplitude. Die Hauptfunktion der Sonotrode ist es, diese Schwingung zu verstärken.

Ein piezoelektrischer Wandler bzw. Kristall erzeugt einen kleinen elektrischen Strom, wenn er zusammengedrückt wird. Wenn der elektrische Strom durch den Kristall geleitet wird, dehnt er sich aus. Wenn der Strom entfernt wird, nimmt der Kristall seine ursprüngliche Größe und Form wieder an. Solche Wandler sind bis zu 900 Watt erhältlich. Piezo-Elektrokristalle haben einen hohen Umwandlungswirkungsgrad von 95%. Bei der Verwendung eines derartigen Wandlers wird ein elektrisches Signal in den Wandler eingeleitet und die dadurch erzeugte mechanische Schwingung an die Sonotrode weitergegeben.

Ein magnetostriktiver Schallwandler ändert seine Länge, wenn er einem starken Magnetfeld ausgesetzt wird. Diese Wandler werden aus Nickel oder Nickellegierungsblechen hergestellt. Ihr Umwandlungswirkungsgrad liegt bei etwa 20-30%. Solche Wandler sind bis zu 2000 Watt erhältlich. Die maximale Längenänderung, die erreicht werden kann, liegt bei etwa 25 Mikrometern. Bei der Verwendung eines derartigen Wandlers wird ein Magnetfeld in den Wandler gegeben und die dadurch erzeugte mechanische Schwingung dann der Sonotrode zugeführt.

Wegen der hohen Umwandlungseffizienz ist der piezoelektrische Wandler zu bevorzugen. Für das Schneiden von Elektrodenfolien hat sich eine niedrige Frequenz um 10kHz und eine Amplitude um 50 Mikrometer als besonders geeignet herausgestellt. Die Sonotrode erhält eine Eingangsamplitude von etwa 20 bis 25 Mikrometer, wobei die Ausgangsamplitude am Ausgang dann z. B. auf 50 Mikrometer verstärkt wird.

Der Wandler wird insbesondere in Form eines Rings bereitgestellt und im Bereich des Eintritts des Sonotrode angeordnet. Es wird insbesondere ausschließlich die Sonotrode über den Wandler angeregt.

Die Sonotrode bzw. die Düse ist insbesondere aus Titan oder einer Titanlegierung, z. B. Ti₆Al₄V, ausgeführt. Der Hohlraum, der insbesondere als Kanal durch die Sonotrode bzw. Düse vom Einlass bis hin zum Auslass verläuft, ist insbesondere aus Wolframkarbid ausgeführt. Hohlraum bzw. Kanal und Sonotrode können zweiteilig ausgeführt und durch Verpressen miteinander verbunden sein.

Der Hohlraum bzw. Kanal durch die Düse bzw. Sonotrode verläuft insbesondere kegelförmig oder exponentialförmig. Der Auslass weist insbesondere einen geringeren Durchmesser aus als der Einlass.

Mit der Düse/ Sonotrode kann der Partikelstrom weiter fokussiert werden, so dass er auf der Oberfläche einen größten Durchmesser von ca. 10 % des größten Durchmessers des Auslasses aufweist.

Die Berechnung der erforderlichen Länge einer Sonotrode, also zwischen Einlass und Auslass, ist einer der wichtigsten Teile der Sonotrodenkonstruktion. Um Verluste zu minimieren und die maximale Energie des Schallkopfs bzw. des Wandlers auf die Sonotrode zu übertragen, sollte die Sonotrode in Resonanz mit der Betriebsfrequenz des Schallkopfs stehen. Die Länge der Sonotrode, insbesondere bis hin zur Spitze des Schneidwerkzeugs sollte einem ungraden Vielfachen der halben Wellenlänge der Schwingung des Wandlers (lambda /2) entsprechen. Es ist insbesondere zu beachten, dass die Amplitude der Schwingung am Auslass maximal ist. Der Schwingungsknoten ist insbesondere am Einlass der Sonotrode vorgesehen, der Schwingungsbauch am Auslass bzw. an der Spitze des Schneidwerkzeugs.

Der Abstand zwischen der Oberfläche und dem Auslass sollte insbesondere einem Vielfachen der Wellenlänge der Schwingung des Wandlers entsprechen. Damit ist eine Amplitude der Schwingung im Fokuspunkt des Partikelstroms auf der Oberfläche maximal. Insbesondere erhält der Einlass des Kanals der Sonotrode die Amplitude vom Schallwandler.

Insbesondere wird über die Partikelzuleitung eine Mischung aus zumindest den Partikeln sowie einer wasserfreien Flüssigkeit zugeführt.

Insbesondere weist die Flüssigkeit einen Anteil von höchstens 25 Gew.-%, bevorzugt von 4 bis 15 Gew.-%, besonders bevorzugt von mindestens 2 Gew.-%, an der Mischung auf.

Insbesondere umfasst die Flüssigkeit einen Bestandteil eines Karbonat-basierten Elektrolyten oder ein Paraffin-basiertes Öl.

Insbesondere umfasst die Flüssigkeit einen Bestandteil eines Karbonat-basierten Elektrolyts, z. B. Ethylenkarbonat (C₃H₄O₃) oder Diethylenkarbonat (C₅H₁₀O₃), oder ein Paraffin-basiertes Öl. Wird als Flüssigkeit ein Elektrolyt-Bestandteil verwendet, ist dessen Anhaftung an der Elektrodenfolie nicht schädlich, auch nicht für den späteren Betrieb der so hergestellten Batteriezelle.

Ethylenkarbonat kann insbesondere durch Polypropylenkarbonat ergänzt werden, so dass die Flüssigkeit auch bei geringeren Temperaturen keinen festen Zustand annimmt.

Bei dem vorgeschlagenen Verfahren wird insbesondere kein Wasser zur Herstellung der Mischung verwendet, im Gegensatz zum bekannten Hammerschlagverfahren.

Die Flüssigkeit kann den Partikeln in einer Mischeinrichtung zugeführt werden. Die Flüssigkeit und die Partikel werden insbesondere gemischt und dann, z. B. als sogenannter *"slurry",* zur Zuführung zur Schneidvorrichtung bereitgestellt. Über die Partikelzuleitung kann die Mischung aus Partikeln und Flüssigkeit dann zugeführt werden.

Insbesondere wird der Gasstrom über eine Venturi-Düse der Düse zugeführt.

Insbesondere umfasst der Gasstrom (ausschließlich) Luft. Diese wird insbesondere stromaufwärts der Gaszufuhrleitung verdichtet, insbesondere auf einen Druck von mindestens 2 bar, bevorzugt von mindestens 5 bar; besonderes bevorzugt von höchstens 10 bar.

Für die Verdichtung kann ein Gaskompressor in Form eines Zentrifugalkompressor in radialer Bauweise eingesetzt werden. Dabei wird trockenes Gas (z. B. trockene Luft) in das Zentrum eines rotierenden Laufrads mit radialen Schaufeln gesaugt und durch die Zentrifugalkraft verdichtet. Die Rotationsgeschwindigkeit des Zentrifugalkompressors steuert den Gasdruck.

Der Gasstrom wird über die Gaszuleitung der Schneidvorrichtung zugeführt und in den Eintritt der Venturi-Düse (in den konvergierenden ersten Abschnitt) eingeleitet.

Eine Venturi-Düse ist grundsätzlich bekannt. Diese umfasst regelmäßig einen konvergierenden ersten Abschnitt, einen zweiten Abschnitt mit einem geringsten Durchströmungsquerschnitt und einen divergierenden dritten Abschnitt. Die Venturi-Düse weist stromaufwärts des ersten Abschnitts einen Eintritt und stromabwärts des dritten Abschnitts einen Austritt auf. Die Venturi-Düse erstreckt sich zwischen Eintritt und Austritt entlang der Durchströmungsrichtung über eine Gesamtlänge. Die einzelnen Abschnitte erstrecken sich jeweils über eine Länge.

Eine Venturi-Düse besteht insbesondere aus einem glattwandigen Rohrstück mit einer Verengung des Querschnitts, beispielsweise durch zwei gegeneinander gerichtete Konen, die an der Stelle ihres geringsten Durchmessers vereint sind. Wenn ein Fluid durch eine Venturi-Düse fließt, ist an der engsten Stelle des Rohrstücks der dynamische Druck (Staudruck) maximal und der hydrostatische Druck minimal.

Im ersten Abschnitt beschleunigt der erste Gasstrom auf eine hohe Geschwindigkeit (Machzahlen im Bereich von 0,5 bis 1), während es sich im divergierenden Bereich der Düse ausdehnt. Die Geschwindigkeit des ersten Gasstroms am Austritt sollte etwa bei einer Machzahl 0,5 bis 1 liegen. Der Druck am Austritt entspricht insbesondere dem Umgebungsdruck.

Der (trockene) Gasstrom bewegt sich durch die Venturi-Düse hin zum Austritt, wobei der am Eintritt vorliegende Druck am Austritt in eine höhere Geschwindigkeit umgewandelt wird. Dieser beschleunigte Gasstrom wird insbesondere dem Einlass der Düse bzw. der Sonotrode zugeführt.

Die Partikelzuleitung mündet insbesondere am Eintritt der Venturi-Düse, stromabwärts des Eintritts in dem ersten Abschnitt oder in dem dritten Abschnitt. Die einzelnen Ströme werden insbesondere über Ventile geregelt. Über die Partikelzuleitung können insbesondere ausschließlich die Partikel, ggf. unterstützt von einem Gasstrom, oder die Mischung, umfassend die Partikel und die Flüssigkeit, zugeführt werden.

Bei einer Einmündung der Partikelzuleitung stromaufwärts des zweiten Abschnitts können zumindest die Partikel auf die gleiche Geschwindigkeit wie der Gasstrom beschleunigt werden. Die Venturi-Düse wird aber eine geringere Lebensdauer aufweisen, da die sich schnell bewegenden Partikel abrasiv auf den zweiten Abschnitt einwirken.

Bei einer Einmündung der Partikelzuleitung stromabwärts des zweiten Abschnitts hat der erste Gasstrom im dritten Abschnitt die höchste Geschwindigkeit. Die Geschwindigkeit der Partikel ist wesentlich geringer als bei einer weiter stromaufwärts vorgesehenen Einmündung. Die Venturi-Düse hat allerdings eine höhere Lebensdauer.

Insbesondere weist der Partikelstrom zumindest am Auslass eine Strömungsgeschwindigkeit von mindestens 0,15 Mach, bevorzugt von zwischen 0,15 und 0,5 Mach, auf.

Insbesondere wird als Partikel Aluminiumoxid verwendet. Aluminiumoxid ist keramisch, nicht elektrisch leitend und ggf. in der Batteriezelle z. B. als Beschichtung des Separators vorhanden. Außerdem hat es eine hohe Härte und einen hohen elektrischen Widerstand.

Insbesondere weisen die Partikel einen größten Durchmesser von höchstens 40 Mikrometer auf. Eine Qualität der durch das Schneiden erzeugten Trennkanten kann durch kleinere Partikel erhöht werden. Bevorzugt weisen die Partikel einen größten Durchmesser von 10 bis 30 Mikrometer auf.

Insbesondere weist die Schneidvorrichtung eine Absaugeinrichtung auf, über die zumindest von der Oberfläche zurück zur Düse zurückprallende Partikel oder durch die Elektrodenfolie hindurch getretene Partikel abgesaugt werden. Die Absaugeinrichtung kann zumindest teilweise benachbart zu der Düse bzw. Sonotrode angeordnet sein. Damit können von der Oberfläche zurückprallende Partikel abgesaugt werden. Alternativ oder zusätzlich kann zumindest ein Teil der Absaugeinrichtung von der Düse/ Sonotrode durch die Elektrodenfolie beabstandet angeordnet sein. Die Absaugeinrichtung kann also zumindest gegenüberliegend zur Düse/ Sonotrode angeordnet sein, wobei die Elektrodenfolie dazwischen angeordnet ist. Die durch die Elektrodenfolie hindurch tretenden Partikel können dann abgesaugt werden.

Insbesondere wird die Elektrodenfolie über Spannrollen und/oder Förderrollen geführt, so dass die Lage der Elektrodenfolie gegenüber der Schneidvorrichtung definiert ist. Die Schnittlinien verlaufen insbesondere so, dass in diesem Bereich keine Abstützung durch eine Rolle vorliegt.

Die Rollen können mit einer Oberflächenstruktur ausgeführt sein, so dass die Elektrodenfolie nicht nur in Längsrichtung (x-Richtung) sondern auch in Richtung der Breite (y-Richtung) gespannt wird.

Insbesondere kann die Elektrodenfolie über eine Abstützvorrichtung abgestützt werden, so dass insbesondere ein Abstand zwischen dem Auslass der Düse/ Sonotrode und der Oberfläche genau eingestellt werden kann. Insbesondere kann die Absaugeinrichtung zumindest teilweise in der Abstützvorrichtung integriert ausgeführt sein, so dass unterhalb der Schnittlinie und insbesondere zu jedem Zeitpunkt während des Trennens, die Absaugeinrichtung gegenüber von dem Auslass angeordnet ist.

Insbesondere umfasst die Schneidvorrichtung eine Heizeinrichtung, durch die die von dem Partikelstrom beaufschlagte Elektrodenfolie getrocknet wird. Insbesondere umfasst die Heizeinrichtung zumindest einen Infrarotstrahler, durch den die Elektrodenfolie erwärmt werden kann, insbesondere auf 105 bis 125 Grad Celsius, bevorzugt auf ca. 120 Grad Celsius.

Mit der Heizeinrichtung kann insbesondere die Flüssigkeit der Mischung von den Trennkanten entfernt werden.

Insbesondere weist die Schneidvorrichtung eine Reinigungsvorrichtung auf, in der zumindest eine Trennkante der Elektrodenfolie zumindest durch einen mechanischen Kontakt, z. B. durch eine Bürste oder eine Rolle, oder durch einen ionisierten zweiten Gasstrom von anhaftenden Partikeln gereinigt wird. Die ggf. statisch aufgeladenen Partikel können durch den ionisierten zweiten Gasstrom neutralisiert und dann einfacher abgesaugt oder abgeblasen werden.

Die Partikel können insbesondere wiederholt genutzt werden. Dazu können die Partikel gesammelt und zurückgeführt werden, so dass sie erneut über die Partikelzuleitung dem Verfahren zugeführt werden können.

Es wird weiter eine Schneidvorrichtung zum Schneiden von Elektrodenfolien, die für einen Einsatz in einer Batteriezelle vorgesehen sind, vorgeschlagen. Die Schneidvorrichtung ist insbesondere zur Durchführung des beschriebenen Verfahrens geeignet ausgeführt.

Die Schneidvorrichtung umfasst zumindest eine Düse mit einem Auslass, ein Schneidwerkzeug, eine Schwingungseinrichtung zur Anregung zumindest des Schneidwerkzeugs zu Schwingungen, eine Partikelzuleitung zur Zuleitung zumindest von Partikeln und eine Gaszuleitung zur Zuleitung eines ersten Gasstroms. Die Partikel und der erste Gasstrom sind in der Schneidvorrichtung zu einem Partikelstrom mischbar und über die Düse dem Auslass zuführbar. Das Schneidwerkzeug und der Auslass der Düse sind über der Elektrodenfolie in einem Abstand zu einer Oberfläche der Elektrodenfolie anordenbar und die Elektrodenfolie zumindest durch den Partikelstrom und durch die Schwingungen des Schneidwerkzeugs trennbar.

Insbesondere wird über die Partikelzuleitung eine Mischung aus zumindest den Partikeln sowie einer wasserfreien Flüssigkeit zugeführt. Die Flüssigkeit dient insbesondere der Benetzung der Partikel. Damit sind die Partikel mehr aneinander gebunden und ein Zurückprallen der auf die Oberfläche geschleuderten Partikel kann verringert bzw. verhindert werden.

Insbesondere ist die Düse eine Sonotrode, wobei das Schneidwerkzeug und der Auslass durch eine Schwingungseinrichtung der Schneidvorrichtung zu Schwingungen anregbar ist. Infolge der Schwingungen werden der Auslass und das Schneidwerkzeug insbesondere in einer zur Oberfläche senkrecht orientierten Ebene bewegt.

Es wird weiter eine Batteriezelle vorgeschlagen, zumindest umfassend ein Gehäuse und darin angeordnet einen Stapel von Elektrodenfolien, die insbesondere durch das beschriebene Verfahren und/ oder durch die beschriebene Schneidvorrichtung hergestellt sind.

Es wird weiter ein Kraftfahrzeug vorgeschlagen, zumindest umfassend einen Traktionsantrieb und eine Batterie mit mindestens einer der beschriebenen Batteriezellen, wobei der Traktionsantrieb durch die mindestens eine Batteriezelle mit Energie versorgbar ist.

Das Verfahren ist insbesondere durch ein System zur Datenverarbeitung, z. B. ein Steuergerät, durchführbar, wobei das System Mittel aufweist, die zur Ausführung der Schritte des Verfahrens geeignet ausgestattet, konfiguriert oder programmiert sind bzw. die das Verfahren ausführen. Mit dem System kann zumindest
- eine Regelung des mindestens einen ersten Gasstroms;
- eine Regelung des mindestens einen Partikelstroms;
- eine Regelung der Schnittgeschwindigkeit;
- eine Regelung der Geschwindigkeit des Partikelstroms; und/oder
- eine Regelung der Schwingungseinrichtung
erfolgen.

Die Schneidvorrichtung umfasst insbesondere das vorstehend beschriebene System.

Die Mittel umfassen z. B. einen Prozessor und einen Speicher, in dem durch den Prozessor auszuführende Befehle gespeichert sind, sowie Datenleitungen oder Übertragungseinrichtungen, die eine Übertragung von Befehlen, Messwerten, Daten oder ähnlichem zwischen den angeführten Elementen ermöglichen.

Es wird weiter ein Computerprogramm vorgeschlagen, umfassend Befehle, die bei der Ausführung des Programms durch einen Computer diesen veranlassen, das beschriebene Verfahren bzw. die Schritte des beschriebenen Verfahrens auszuführen.

Es wird weiter ein computerlesbares Speichermedium vorgeschlagen, umfassend Befehle, die bei der Ausführung durch einen Computer diesen veranlassen, das beschriebene Verfahren bzw. die Schritte des beschriebenen Verfahrens auszuführen.

Die Ausführungen zu dem Verfahren sind insbesondere auf die Schneidvorrichtung, die Batteriezelle, das Kraftfahrzeug, das System zur Datenverarbeitung sowie auf das computerimplementierte Verfahren (also den Computer bzw. den Prozessor, das computerlesbare Speichermedium) übertragbar und umgekehrt.

Es werden folgende Vorteile realisiert:
- das vorgeschlagene Trennen einer Elektrodenfolie mit Partikeln ermöglicht insbesondere ein gratfreies Schneiden;
- es erzeugt keine Wärmeeinflusszone wie beim Laserschneiden;
- ein Elektrolytbestandteil, z. B. Ethylencarbonat (EC), kann als Flüssigkeit für die Mischung verwendet werden; das heißt, selbst wenn nach dem Trocknen Ethylenkarbonat an der Trennkante vorhanden ist, ist es nicht schädlich;
- insbesondere wird Aluminiumoxid für Partikel vorgeschlagen; es ist kein elektrischer Leiter und erzeugt daher keinen Kurzschluss, wenn Partikel auf der Trennkante verbleiben;
- anstelle von Ethylencarbonat, ggf. mit Additiven, kann Dimethylencarbonat, ggf. mit Additiven, oder ein Paraffin-basiertes Öl verwendet werden; Paraffinöl kann zur schnellen Verdampfung mit Alkohol gemischt werden; mit der Heizvorrichtung kann das gesamte Paraffin-basierte Öl verdampft werden;
- Sonotrode und Venturi-Düse können integriert ausgeführt werden; diese Baugruppe erzeugt eine hohe Geschwindigkeit und Vibration der Partikel; es kann als eine sehr kompakte Baugruppe bereitgestellt werden; die Venturi-Düse kann am Einlass der Düse/ Sonotrode platziert werden; es ist möglich, Venturi-Düse und Sonotrode als einzelne Baugruppe aus Wolframkarbid herzustellen; ggf. kann die Venturi-Düse mit einer Schraube und einer schwingungsdämpfenden Membran am Eintritt der Sonotrode befestigt werden; dies ermöglicht eine gute Flexibilität bei der Befestigung von Venturi-Düse und Sonotrode; die Venturi-Düse wird dabei nicht von der Sonotrode angeregt;
- kein Partikel kann an der Trennkante haften bleiben, da der Gasstrom mit hoher Geschwindigkeit die Kantenreinigung durchführt; vor dem Aufwickeln kann eine weitere Reinigung der Trennkanten und der Oberfläche durchgeführt werden;
- das Verfahren kann mit einer sehr hohen Schnittgeschwindigkeit von ca. 150 m/min betrieben werden;
- Werkzeugverschleiß tritt nur am Schneidwerkzeug auf, das einfach wechselbar ist; aus diesem Grund ist das Verfahren sehr wirtschaftlich;
- es wird kein Gas wie beim Laserschneiden erzeugt; daher ist auch keine aufwendige Gasabsaugung erforderlich; es ist auch keine Kühlung der Elektrodenfolie notwendig, um die Wärmeeinflusszone zu reduzieren;
- das Verfahren kann sowohl zum Schlitzen als auch zum Ausklinken und Abtrennen verwendet werden;
- es wird eine sehr dünne Trennkante erzeugt, da feine Partikel mit einem größten Durchmesser von ca. 12 Mikrometer verwendet werden können und die Amplitude der Schwingung des Auslasses auf ca. 50 Mikrometer eingestellt werden kann;
- durch Reduzierung der Geschwindigkeit und Vibration können verschiedene Elektrodenfolienmaterialien mit derselben Schneidvorrichtung getrennt werden;
- es wird weniger Stellfläche benötigt, da Trennen, Trocknen und Reinigen in einer einzigen Maschine, der Schneidvorrichtung integriert werden können;
- das Verfahren ist wirtschaftlich, da die Partikel mehrfach wiederverwendet werden können;
- der erforderliche Druck für den ersten Gasstrom kann 6 bar betragen, der in der Industrie allgemein verfügbar ist; es liegt daher kein Bedarf zur Bereitstellung trockener Hochdruckluft vor;
- die Sonotrode hat zwei Hauptfunktionen: sie verstärkt die Amplitude der Vibration und verkleinert den Durchmesser des auf der Oberfläche auftreffenden Partikelstroms; auf diese Weise kann ein scharfer und kleiner Brennpunkt bereitgestellt werden und die Sonotrode gibt eine große Amplitude an die Partikel ab, so dass die Schneidwirkung der Partikel verstärkt wird;
- die Sonotrode ist einfach herzustellen; ein innerer Kanal der Sonotrode, der in Kontakt mit den Partikeln in Berührung kommt, kann aus Wolframkarbid gefertigt werden; dies ermöglicht der Sonotrode eine gute Verschleißfestigkeit und eine hohe Lebensdauer;
- durch die Kombination von Vibration des Schneidwerkzeugs und kinetischer Energie des Partikelstrom kann mehr Schneidenergie erzeugt werden, z. B. zum Schneiden harter Keramikbeschichtungen;
- durch die Kombination der Wirkprinzipien (Wurfmechanismus bzw. Hammerwirkung) kann ein Abprallen der Partikel von der Oberfläche der Elektrodenfolie verhindert werden, so dass keine zusätzliche Anordnung zum Auffangen bzw. Absaugen der abgeprallten Partikel erforderlich ist;
- für das Schlitzen wird insbesondere eine zylindrische Sonotrode mit einem entsprechend zylindrischen bzw. konischen Schneidwerkzeug eingesetzt.
- für das Ausklinken und Abtrennen wird insbesondere eine rechteckig geformte Sonotrode mit einem entsprechend rechteckigen Schneidwerkzeug eingesetzt;
- wenn ein massives Schneidwerkzeug verwendet wird, werden der Gasstrom und die Partikel durch einen benachbart zu dem Schneidwerkzeug angeordneten Zuführbereich hin zur Oberfläche geleitet, das Schneidwerkzeug und die Sonotrode sind insbesondere durch einen Schiebermechanismus verbunden; Sonotrode und Zuführbereich sind insbesondere durch Schrauben und ggf. Muttern verbunden;
- in der Variante mit massivem Schneidwerkzeug ist das Hammerschlagverfahren der dominantere Schneidmechanismus;
- wenn ein hohles Schneidwerkzeug verwendet wird, ist ein Zuführbereich insbesondere nicht vorgesehen; Schneidwerkzeug und Sonotrode sind insbesondere durch einen Schiebermechanismus verbunden; der Partikelstrom tritt über den am Schneidwerkzeug ausgebildeten Auslass aus;
- in der Variante mit hohlem Schneidwerkzeug ist der Wurfmechanismus der dominantere Schneidmechanismus.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine Schneidvorrichtung zum Durchführen des Verfahrens;
- Fig. 2:: ein erstes Wirkprinzip einer Schneidvorrichtung;
- Fig. 3:: ein zweites Wirkprinzip einer Schneidvorrichtung;
- Fig. 4:: eine erste Ausführungsvariante der Schneidvorrichtung nach Fig. 1;
- Fig. 5:: einen Teil der Schneidvorrichtung nach Fig. 4 in einer perspektivischen Ansicht;
- Fig. 6:: eine Sonotrode und Schneidwerkzeug der Schneidvorrichtung nach Fig. 4 und 5 in einer perspektivischen Ansicht;
- Fig. 7:: eine zweite Ausführungsvariante der Schneidvorrichtung nach Fig. 1;
- Fig. 8:: eine rechteckige Sonotrode und Schneidwerkzeug der Schneidvorrichtung nach Fig. 7 in einer perspektivischen Ansicht;
- Fig. 9:: ein Schneidwerkzeug der Schneidvorrichtung nach Fig. 7 und 8;
- Fig. 10:: eine zylindrische Sonotrode und Schneidwerkzeug der Schneidvorrichtung nach Fig. 7 in einer perspektivischen Ansicht; und
- Fig. 11: ein Detail der Fig. 10.

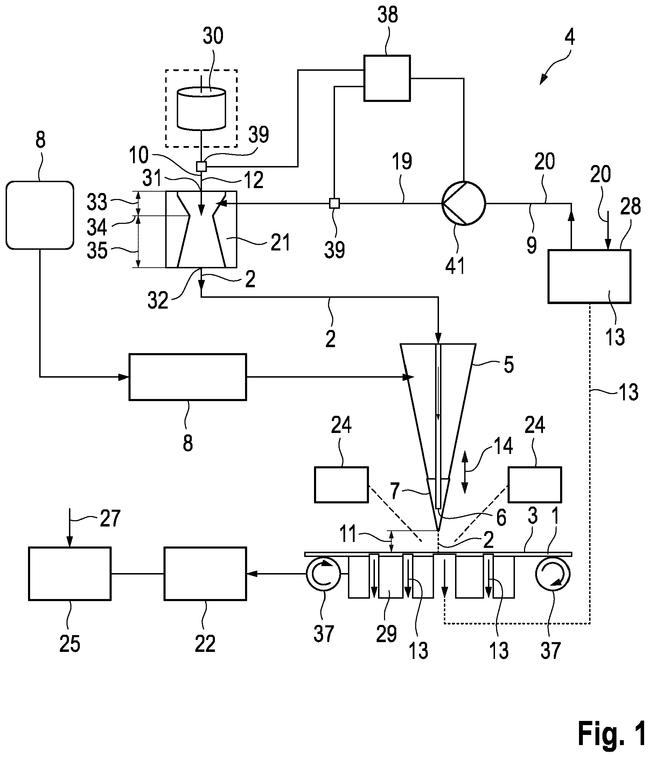

Die Fig. 1 zeigt eine Schneidvorrichtung 4 zum Durchführen des Verfahrens. Die Schneidvorrichtung 4 umfasst eine Düse 5 mit einem Auslass 6, ein Schneidwerkzeug 7, eine Schwingungseinrichtung 8, eine Partikelzuleitung 9 zur Zuleitung zumindest von Partikeln 13 und eine Gaszuleitung 10 zur Zuleitung eines ersten Gasstroms 12. Die Partikel 13 und der erste Gasstrom 12 werden in der Schneidvorrichtung 4 zu einem Partikelstrom 2 gemischt und über die Düse 5 dem Auslass 6 zugeführt. Die Auslass 6 ist über der Elektrodenfolie 1 in einem Abstand 11 zu einer Oberfläche 3 der Elektrodenfolie 1 angeordnet und die Elektrodenfolie 1 wird u.a. durch den Partikelstrom 2 getrennt.

Gemäß Schritt a) erfolgt ein Bereitstellen einer Elektrodenfolie 1 mit einer Oberfläche 3. Die Elektrodenfolie 1 wird als Endlosmaterial bereitgestellt. Die Elektrodenfolie 1 weist zwei größte Seitenflächen mit einer theoretisch endlosen Länge in einer x-Richtung, eine Breite in einer y-Richtung und eine Dicke in einer z-Richtung auf. Die Erstreckung in z-Richtung ist dabei die geringste. Eine der Seitenflächen der Elektrodenfolie 1 bildet vorliegend die Oberfläche 3.

Weiter erfolgt ein Bereitstellen einer Schneidvorrichtung 4, umfassend eine Düse 5 mit einem Auslass 6, und ein Anordnen des Auslasses 6 über der Elektrodenfolie 1 in einem Abstand 11 zu der Oberfläche 3 (Schritt b)). Die Düse 5 dient der Ausrichtung des Partikelstroms 2 auf die Oberfläche 3. Über den Auslass 6 der Düse 5 tritt der Partikelstrom 2 aus der Schneidvorrichtung 4 aus und strömt hin zur Oberfläche 3. Die Düse 5 ist in einem derartigen Abstand 11 von der Oberfläche 3 angeordnet, dass kein direkter mechanischer Kontakt zwischen Düse 5 und Oberfläche 3 vorliegt. Das Schneidwerkzeug 7 kann den Auslass 6 aufweisen oder der Auslass 6 kann benachbart zu dem Schneidwerkzeug 7 angeordnet werden. Das Schneidwerkzeug 7 wird durch die Schwingungseinrichtung 8 zu Schwingungen 14 angeregt.

Das Schneidwerkzeug 7 kontaktiert die Oberfläche 3 über mindestens ein Partikel 13, das zwischen dem Schneidwerkzeug 7 und der Oberfläche 3 angeordnet ist. Das Schneidwerkzeug 7 kontaktiert also das Partikel 13 und bewegt das Partikel 13 infolge der Schwingungen 14. Das derart angeregte Partikel 13 erzeugt die Schneidwirkung an der Elektrodenfolie 1. Der Abstand 11 zwischen Schneidwerkzeug 7 und Oberfläche 3 kann also durch einzelne Partikel 13 überbrückt werden.

Zudem erfolgt ein Bereitstellen einer Partikelzuleitung 9 und einer Gaszuleitung 10. Diese Zuleitungen 9, 10 dienen dem Transport der Partikel 13 und eines ersten Gasstroms 12.

Gemäß Schritt c) erfolgt insbesondere ein Einleiten eines ersten Gasstroms 12 aus der Gaszuleitung 10 in die Schneidvorrichtung 4. Gemäß Schritt d) erfolgt ein Einleiten zumindest von Partikeln 13 aus der Partikelzuleitung 9 in die Schneidvorrichtung 4. Weiter erfolgt ein Mischen des ersten Gasstroms 12 und zumindest der Partikel 13 in der Schneidvorrichtung 4 zu dem Partikelstrom 2 gemäß Schritt e). Der erste Gasstrom 12 dient dem Transport und der Beschleunigung der Partikel 13, so dass diese zusammen mit dem Gasstrom 12, also als Partikelstrom 2, über die Düse 5 hin zur Oberfläche 3 transportiert werden.

Gemäß Schritt f) erfolgt ein Anregen des Schneidwerkzeugs 7 und der Düse 5 zu Schwingungen 14 durch die Schwingungseinrichtung 8. Infolge der Schwingungen 14 bewegen sich das Schneidwerkzeug 7 und der Auslass 6 in einer zur Oberfläche 3 senkrecht orientierten Ebene.

Gemäß Schritt g) erfolgt ein Beaufschlagen der Elektrodenfolie 1 mit dem aus dem Auslass 6 austretenden Partikelstrom 2 und ein Trennen der Elektrodenfolie 1. Die Elektrodenfolie 1 wird durch das Auftreffen der Partikel 13 auf der Oberfläche 3 sukzessive durchtrennt. Dabei werden die Partikel 13 auf die Oberfläche 3 geschleudert, so dass das Material der Oberfläche 3 bzw. der Elektrodenfolie 1 durch die Partikel 13 verdrängt wird.

Gemäß Schritt h) erfolgt ein Beaufschlagen der Elektrodenfolie 1 mit den Schwingungen 14 des Schneidwerkzeugs 7 über mindestens ein Partikel 13, das zwischen dem Schneidwerkzeug 7 und der Elektrodenfolie 1 angeordnet ist, so dass die Elektrodenfolie 1 getrennt wird.

Die Düse 5 ist eine Sonotrode bzw. als eine Sonotrode ausgebildet, wobei der Auslass 6 und das Schneidwerkzeug 7 durch eine Schwingungseinrichtung 8 angeregt wird. Die Sonotrode ist als Düse 5 hohl ausgeführt.

Über die Partikelzuleitung 9 wird ausgehend von einer Mischeinrichtung 28 über eine Pumpe 41 eine Mischung 19 aus den Partikeln 13 sowie einer wasserfreien Flüssigkeit 20 zugeführt.

Der erste Gasstrom 12 wird über eine Venturi-Düse 21 der Düse 5 zugeführt. Dazu wird der erste Gasstrom 12 stromaufwärts der Gaszuleitung 10 verdichtet. Für die Verdichtung wird ein Verdichter 30, z. B. ein Gaskompressor in Form eines Zentrifugalkompressor in radialer Bauweise eingesetzt. Der erste Gasstrom 12 wird über die Gaszuleitung 10 der Schneidvorrichtung 4 zugeführt und in den Eintritt 31 der Venturi-Düse 21 in den konvergierenden ersten Abschnitt 33 eingeleitet.

Eine Venturi-Düse 21 umfasst einen konvergierenden ersten Abschnitt 33, einen zweiten Abschnitt 34 mit einem geringsten Durchströmungsquerschnitt und einen divergierenden dritten Abschnitt 35. Die Venturi-Düse 21 weist stromaufwärts des ersten Abschnitts 33 einen Eintritt 31 und stromabwärts des dritten Abschnitts 35 einen Austritt 32 auf. Die Venturi-Düse 21 erstreckt sich zwischen Eintritt 31 und Austritt 32 entlang der Durchströmungsrichtung über eine Gesamtlänge.

Der (trockene) erste Gasstrom 12 bewegt sich durch die Venturi-Düse 21 hin zum Austritt 32, wobei der am Eintritt 31 vorliegende Druck am Austritt 32 in eine höhere Geschwindigkeit umgewandelt wird. Dieser beschleunigte erste Gasstrom 12 wird dem Einlass 36 der Düse 5 bzw. der Sonotrode zugeführt.

Die Partikelzuleitung 9 mündet stromabwärts des Eintritts 31 in dem ersten Abschnitt 33. Bei einer Einmündung der Partikelzuleitung 9 stromaufwärts des zweiten Abschnitts 34 können die Partikel 13 auf die gleiche Geschwindigkeit wie der erste Gasstrom 12 beschleunigt werden.

Die einzelnen Ströme, also der erste Gasstrom 12 und der Strom der Mischung 19 werden über Ventile 39 geregelt.

Die Schneidvorrichtung 4 weist eine Absaugeinrichtung 24 auf, über die von der Oberfläche 3 zurück zur Düse 5 zurückprallende Partikel 13 und durch die Elektrodenfolie 1 hindurch getretene Partikel 13 abgesaugt werden. Die Absaugeinrichtung 24 ist teilweise benachbart zu der Düse 5 bzw. Sonotrode angeordnet. Damit können von der Oberfläche 3 zurückprallende Partikel 13 abgesaugt werden. Zusätzlich ist ein Teil der Absaugeinrichtung 24 von der Düse 5 durch die Elektrodenfolie 1 beabstandet angeordnet. Die Absaugeinrichtung 24 ist also auch gegenüberliegend zur Düse 5 angeordnet, wobei die Elektrodenfolie 1 dazwischen angeordnet ist. Die durch die Elektrodenfolie 1 hindurch tretenden Partikel 13 können dann abgesaugt werden.

Die Elektrodenfolie 1 wird über Spannrollen 37 und Förderrollen 37 geführt, so dass die Lage der Elektrodenfolie 1 gegenüber der Schneidvorrichtung 4 definiert ist. Die Schnittlinien verlaufen so, dass in diesem Bereich keine Abstützung durch eine Rolle 37 vorliegt.

Die Elektrodenfolie 1 wird über eine Abstützvorrichtung 29 abgestützt, so dass ein Abstand 11 zwischen dem Auslass 6 der Düse 5 und der Oberfläche 3 genau eingestellt werden kann. Die Absaugeinrichtung 24 ist zumindest teilweise in der Abstützvorrichtung 29 integriert ausgeführt, so dass unterhalb der Schnittlinie und zu jedem Zeitpunkt während des Trennens, die Absaugeinrichtung 24 gegenüber von dem Auslass 6 angeordnet ist.

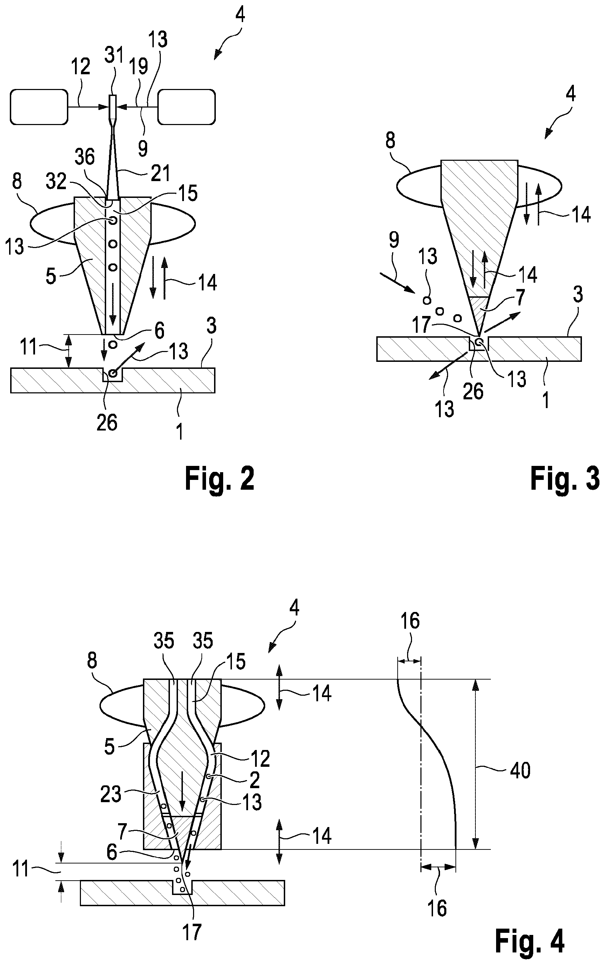

Die Schneidvorrichtung 4 umfasst eine Heizeinrichtung 22, durch die die von dem Partikelstrom 2 beaufschlagte Elektrodenfolie 1 getrocknet wird. Mit der Heizeinrichtung 22 kann die Flüssigkeit 20 der Mischung 19 von den Trennkanten 26 (siehe Fig. 4) entfernt werden.

Die Schneidvorrichtung 4 weist eine Reinigungsvorrichtung 25 auf, in der die Trennkanten 26 der Elektrodenfolie 1 durch einen mechanischen Kontakt, z. B. durch eine Bürste oder eine Rolle, oder durch einen ionisierten zweiten Gasstrom 27 von anhaftenden Partikeln 13 gereinigt wird. Die ggf. statisch aufgeladenen Partikel 13 können durch den ionisierten zweiten Gasstrom 27 neutralisiert und dann einfacher abgesaugt oder abgeblasen werden.

Die Partikel 13 werden wiederholt genutzt. Dazu werden die Partikel 13 zumindest über die Absaugeinrichtung 24 gesammelt und zu einer Mischeinrichtung 28 für die Mischung 19 zurückgeführt, so dass sie erneut über die Partikelzuleitung 9 der Venturi-Düse 21 zugeführt werden können.

Über ein Steuergerät 38 könnten bestimmte Teile der Schneidvorrichtung 4 gesteuert werden.

Fig. 2 zeigt ein erstes Wirkprinzip einer Schneidvorrichtung 4. Auf die Ausführungen zu Fig. 1 wird Bezug genommen.

Bei dem ersten Wirkprinzip, dem Wurfmechanismus, nimmt der, ggf. vibrierende, erste Gasstrom 12 die abrasiv wirkenden Partikel 13 mit. Der Partikelstrom 2 strömt durch den Hohlraum 15 der als Sonotrode ausgeführten Düse 5 und wird durch die Schwingungen 14 der angeregten Sonotrode angeregt. Die Partikel 13 beginnen in dem ersten Gasstrom 12 zu vibrieren. Sowohl der erste Gasstrom 12 als auch die Partikel 13 werden in Form eines scharfen Abrasiv-Gasmessers auf den Schneidbereich der Oberfläche 3 geschleudert. Dabei kann der Brennpunkt des Abrasiv-Gasmessers sehr klein ausgeführt sein. Das Schneiden erfolgt durch die kinetische und ggf. Vibrations-Energie der vom ersten Gasstrom 12 transportierten Partikel 13.

Fig. 3 zeigt ein zweites Wirkprinzip einer Schneidvorrichtung 4. Auf die Ausführungen zu Fig. 1 und 2 wird Bezug genommen.

Bei dem zweiten Wirkprinzip, Hammerschlagverfahren, erfolgt ein Schneiden mittels Schwingungsanregung und abrasiv wirkenden Partikeln 13. Dabei wird ein Abrasivmittel auf dem Schneidbereich (hier der Oberfläche 3) verteilt und von einem vibrierenden Schneidwerkzeug 7 in Schwingung 14 versetzt. Hier liegt also eine Wechselwirkung zwischen Schneidwerkzeug 7 und Elektrodenfolie 1 vor. Das Schneiden erfolgt durch die Vibrations-Energie des Schneidwerkzeugs 7 und durch die abrasive Wirkung der zwischen Schneidwerkzeug 7 und Oberfläche 3 angeordneten und vom Schneidwerkzeug 7 bewegten Partikel 13.

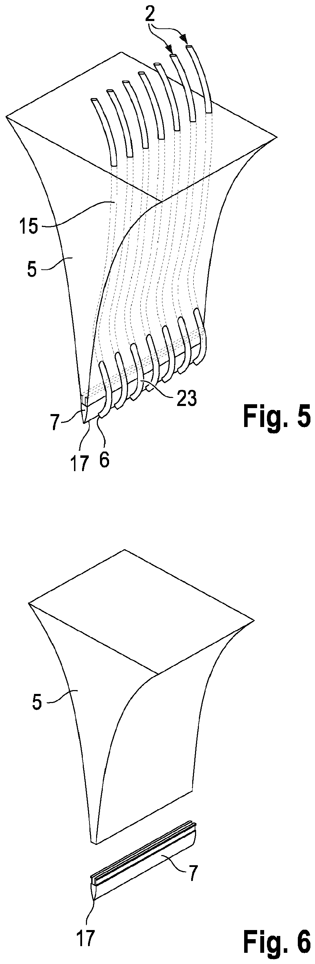

Fig. 4 zeigt eine erste Ausführungsvariante der Schneidvorrichtung 4 nach Fig. 1. Fig. 5 zeigt einen Teil der Schneidvorrichtung 4 nach Fig. 4 in einer perspektivischen Ansicht. Fig. 6 zeigt eine Sonotrode und Schneidwerkzeug 7 der Schneidvorrichtung 4 nach Fig. 4 und 5 in einer perspektivischen Ansicht. Die Fig. 4 bis 6 werden im Folgenden gemeinsam beschrieben. Auf die Ausführungen zu Fig. 1 bis 3 wird Bezug genommen.

Die Düse 5 ist eine Sonotrode bzw. als eine Sonotrode ausgebildet, wobei der Auslass 6 und das Schneidwerkzeug 7 durch eine Schwingungseinrichtung 8 angeregt wird. Die Sonotrode ist als Düse 5 hohl ausgeführt. Der Auslass 6 ist benachbart zu dem Schneidwerkzeug 7 ausgebildet. Der Partikelstrom 2 wird über den Hohlraum 15 der Sonotrode geleitet und dann in einen, benachbart zu dem Schneidwerkzeug 7 angeordneten Zuführbereich 23 überführt. Über den Zuführbereich 23 wird der Partikelstrom 2 hin zu dem Schneidbereich geführt. Das Schneidwerkzeug 7 ist als Massivteil ausgeführt, d. h. nicht hohl. Der Zuführbereich 23 ist mit der Sonotrode verbunden wird durch die Sonotrode mit angeregt.

Der Hohlraum 15 der Sonotrode wird durch eine Mehrzahl von Kanälen gebildet, über die der erste Gasstrom 12 und die Partikel 13 zusammen als Partikelstrom 2 dem Schneidbereich zuführbar sind.

Die Sonotrode ist rechteckig ausgeführt, wobei das Schneidwerkzeug 7 als Massivteil ebenfalls rechteckig ausgeführt ist. Schneidwerkzeug 7 und Sonotrode sind über einen Schiebermechanismus miteinander verbindbar. Das Schneidwerkzeug 7 weist eine der Elektrodenfolie 1 zugewandte, geschlossen ausgeführte Spitze 17 auf.

Die Schwingungseinrichtung 8 umfasst einen Wandler (piezoelektrisch oder magnetostriktiv), auf den ein hochfrequentes elektrisches Signal übertragen wird. Der Wandler wandelt das elektrische Signal in niederfrequente mechanische Schwingungen 14 mit geringer Amplitude 16 um. Im Wesentlichen wandelt der Wandler also elektrische Energie in mechanische Schwingungen 14 um. Diese mechanische Schwingung 14 wird dann an die hohle Sonotrode weitergegeben.

Die mechanischen Schwingungen im Bereich des Wandlers haben eine geringe Amplitude 16 (siehe Darstellung im Diagramm auf der rechten Seite). Die Hauptfunktion der Sonotrode ist es, diese Schwingung 14 zu verstärken.

Der (Schall-)Wandler wird in Form eines Rings bereitgestellt und im Bereich des Einlasses 36 der Düse 5 bzw. Sonotrode angeordnet. Es wird ausschließlich die Sonotrode über den Wandler angeregt. Der Einlass 36 der Düse 5 bzw. des Hohlraums 15 der Sonotrode erhält damit die Amplitude 16 vom Schallwandler der Schwingungseinrichtung 8.

Die Berechnung der erforderlichen Länge 40 einer Sonotrode, also zwischen Einlass 36 und Auslass 6, ist einer der wichtigsten Teile der Sonotrodenkonstruktion. Um Verluste zu minimieren und die maximale Energie des Schallkopfs bzw. des Wandlers auf die Sonotrode zu übertragen, sollte die Sonotrode in Resonanz mit der Betriebsfrequenz des Schallkopfs der Schwingungseinrichtung 8 stehen. Die Länge 40 der Sonotrode sollte einem ungraden Vielfachen der halben Wellenlänge der Schwingung 14 des Wandlers (lambda /2) entsprechen. Die Länge 40 wird so eingestellt, dass die Amplitude 16 der Schwingung 14 am Auslass 6 bzw. an der Spitze 17 des Schneidwerkzeugs 7 maximal ist, dort sollte also der Schwingungsbauch (antinode) der Schwingung 14 vorliegen. Der Schwingungsknoten (node) der Schwingung 14 ist am Einlass 36 angeordnet.

Der Abstand 11 zwischen der Oberfläche 3 und dem Auslass 6 sollte insbesondere einem Vielfachen der Wellenlänge der Schwingung 14 des Wandlers entsprechen. Damit ist eine Amplitude 16 der Schwingung 14 im Fokuspunkt des Partikelstroms 2 auf der Oberfläche 3 maximal.

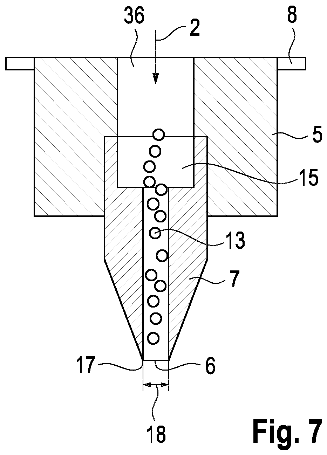

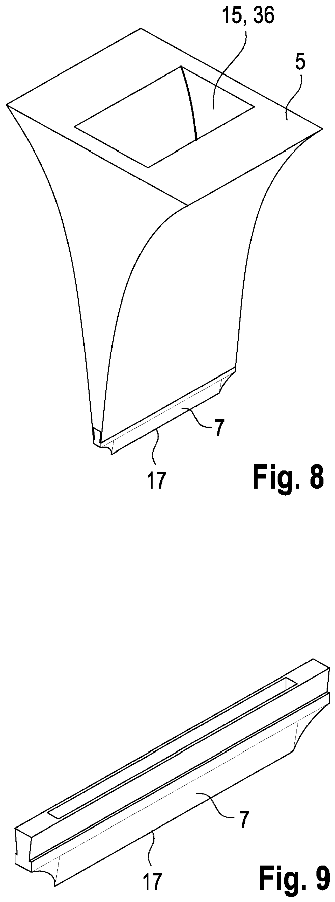

Fig. 7 zeigt eine zweite Ausführungsvariante der Schneidvorrichtung 4 nach Fig. 1. Fig. 8 zeigt eine rechteckige Sonotrode und Schneidwerkzeug 7 der Schneidvorrichtung 4 nach Fig. 7 in einer perspektivischen Ansicht. Fig. 9 zeigt ein Schneidwerkzeug 7 der Schneidvorrichtung 4 nach Fig. 7 und 8. Die Fig. 7 bis 9 werden im Folgenden gemeinsam beschrieben. Auf die Ausführungen zu Fig. 1 bis 6 wird Bezug genommen.

Die Düse 5 ist eine Sonotrode bzw. als eine Sonotrode ausgebildet, wobei der Auslass 6 und das Schneidwerkzeug 7 durch eine Schwingungseinrichtung 8 angeregt wird. Die Sonotrode ist als Düse 5 hohl ausgeführt. Der Auslass 6 der Düse 5 ist an dem Schneidwerkzeug 7 ausgebildet. Der Partikelstrom 2 tritt aus dem, an der Spitze 17 des Schneidwerkzeugs 7 angeordneten Auslass 6 aus. Die Spitze 17 weist eine Breite 18 auf. Das Schneidwerkzeug 7 ist hohl ausgeführt und mit dem Hohlraum 15 der Sonotrode verbunden. Der Partikelstrom 2 wird über den Hohlraum 15 in der Sonotrode und das hohle Schneidwerkzeug 7 hin zu der Oberfläche 3 geleitet. Die Spitze 17 des Schneidwerkzeugs 7 ist hin zu der Oberfläche 3 der Elektrodenfolie 1 orientiert und der Oberfläche 3 am nächsten angeordnet. Das Schneidwerkzeug 7 erstreckt sich ausgehend von der Spitze 17 weg von der Oberfläche 3.

Die Sonotrode ist rechteckig ausgeführt, wobei das Schneidwerkzeug 7 ebenfalls rechteckig ausgeführt ist. Schneidwerkzeug 7 und Sonotrode sind über einen Schiebermechanismus miteinander verbindbar.

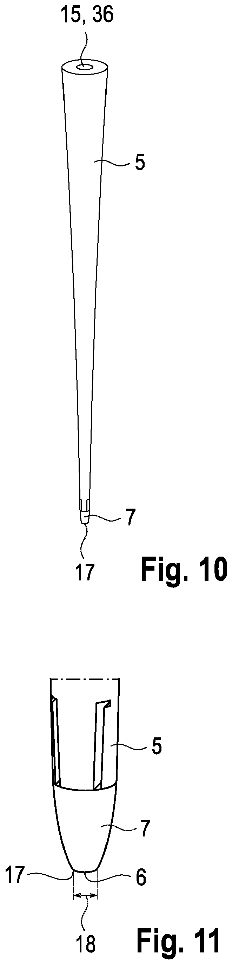

Fig. 10 zeigt eine zylindrische Sonotrode und Schneidwerkzeug 7 der Schneidvorrichtung 4 nach Fig. 7 in einer perspektivischen Ansicht. Fig. 11 zeigt ein Detail der Fig. 10. Die Fig. 10 und 11 werden im Folgenden gemeinsam beschrieben. Auf die Ausführungen zu den Fig. 7 bis 9 wird verwiesen.

Hier sind die Sonotrode und das Schneidwerkzeug 7 zylindrisch bzw. konisch ausgeführt. Schneidwerkzeug 7 und Sonotrode sind über einen Schiebermechanismus miteinander verbindbar. Das Schneidwerkzeug 7 ist hohl ausgeführt und mit dem Hohlraum 15 der Sonotrode verbunden.

### Bezugszeichenliste

- 1: Elektrodenfolie
- 2: Partikelstrom
- 3: Oberfläche
- 4: Schneidvorrichtung
- 5: Düse
- 6: Auslass
- 7: Schneidwerkzeug
- 8: Schwingungseinrichtung
- 9: Partikelzuleitung
- 10: Gaszuleitung
- 11: Abstand
- 12: erster Gasstrom
- 13: Partikel
- 14: Schwingung
- 15: Hohlraum
- 16: Amplitude
- 17: Spitze
- 18: Breite
- 19: Mischung
- 20: Flüssigkeit
- 21: Venturi-Düse
- 22: Heizeinrichtung
- 23: Zuführbereich
- 24: Absaugeinrichtung
- 25: Reinigungsvorrichtung
- 26: Trennkante
- 27: zweiter Gasstrom
- 28: Mischeinrichtung
- 29: Abstützvorrichtung
- 30: Verdichter
- 31: Eintritt
- 32: Austritt
- 33: erster Abschnitt
- 34: zweiter Abschnitt
- 35: dritter Abschnitt
- 36: Einlass
- 37: Rollen
- 38: Steuergerät
- 39: Ventil
- 40: Länge
- 41: Pumpe

## Patentansprüche

1. Verfahren zum Schneiden von Elektrodenfolien (1), die für einen Einsatz in einer Batteriezelle vorgesehen sind, zumindest durch einen Partikelstrom (2); wobei das Verfahren mit einer Schneidvorrichtung (4), umfassend zumindest eine Düse (5) mit einem Auslass (6), ein Schneidwerkzeug (7), eine Schwingungseinrichtung (8), eine Partikelzuleitung (9) und eine Gaszuleitung (10), ausgeführt wird und zumindest die folgenden Schritte aufweist:
a) Bereitstellen einer Elektrodenfolie (1) mit einer Oberfläche (3);
b) Anordnen des Schneidwerkzeugs (7) und des Auslasses (6) über der Elektrodenfolie (1) in einem Abstand (11) zu der Oberfläche (3);
c) Einleiten eines ersten Gasstroms (12) aus der Gaszuleitung (10) in die Schneidvorrichtung (4)
d) Einleiten zumindest von Partikeln (13) aus der Partikelzuleitung (9) in die Schneidvorrichtung (4)
e) Mischen des ersten Gasstroms (12) und zumindest der Partikel (13) in der Schneidvorrichtung (4) zu dem Partikelstrom (2);
f) Anregen zumindest des Schneidwerkzeugs (7) oder zusätzlich der Düse (5) zu Schwingungen (14) durch die Schwingungseinrichtung (8);
g) Beaufschlagen der Elektrodenfolie (1) mit dem aus dem Auslass (6) austretenden Partikelstrom (2), so dass die Elektrodenfolie (1) getrennt wird und
h) Beaufschlagen der Elektrodenfolie (1) mit den Schwingungen (14) des Schneidwerkzeugs (7) über mindestens ein Partikel (13), das zwischen dem Schneidwerkzeug (7) und der Elektrodenfolie (1) angeordnet ist, so dass die Elektrodenfolie (1) getrennt wird.

2. Verfahren nach Patentanspruch 1, wobei die Düse (5) eine Sonotrode ist, wobei der Auslass (6) durch die Schwingungseinrichtung (8) zu Schwingungen angeregt wird.

3. Verfahren nach Patentanspruch 2, wobei die Sonotrode mit einem Hohlraum (15) ausgeführt ist und der Partikelstrom (2) über den Hohlraum (15) dem Auslass (6) zugeführt wird.

4. Verfahren nach Patentanspruch 2 oder 3, wobei der Auslass (6) an dem Schneidwerkzeug (7) ausgebildet ist.

5. Verfahren nach Patentanspruch 2 oder 3, wobei der Auslass (6) benachbart zu dem Schneidwerkzeug (7) ausgebildet ist.

6. Verfahren nach einem der vorhergehenden Patentansprüche, wobei zumindest die Schwingung (14) eine Amplitude (16) von höchstens 80 Mikrometer aufweist oder die Frequenz der Schwingung (14) zwischen 5 kHz und 50 kHz beträgt.

7. Verfahren nach einem der vorhergehenden Patentansprüche, wobei das Schneidwerkzeug (7) eine der Elektrodenfolie (1) zugewandte, geschlossen ausgeführte Spitze (17) mit einer kleinsten Breite (18) von 0,2 bis 1,5 Millimetern aufweist.

8. Verfahren nach einem der vorhergehenden Patentansprüche, wobei über die Partikelzuleitung (9) eine Mischung (19) aus zumindest den Partikeln (13) sowie einer wasserfreien Flüssigkeit (20) zugeführt wird.

9. Verfahren nach Patentanspruch 4, wobei die Flüssigkeit (20) einen Anteil von höchstens 25 Gew.-% an der Mischung (19) aufweist.

10. Verfahren nach Patentanspruch 4 oder 5, wobei die Flüssigkeit (20) einen Bestandteil eines Karbonat-basierten Elektrolyten oder ein Paraffin-basiertes Öl umfasst.

11. Verfahren nach einem der vorhergehenden Patentansprüche, wobei zumindest der erste Gasstrom (12) über eine Venturi-Düse (21) der Düse (5) zugeführt wird.

12. Verfahren nach einem der vorhergehenden Patentansprüche, wobei der Partikelstrom (2) zumindest am Auslass (6) eine Strömungsgeschwindigkeit von mindestens 0,15 Mach aufweist.

13. Verfahren nach einem der vorhergehenden Patentansprüche, wobei die Schneidvorrichtung (4) eine Heizeinrichtung (22) umfasst, durch die die von dem Partikelstrom (2) beaufschlagte Elektrodenfolie (1) getrocknet wird.

14. Schneidvorrichtung (4) zum Schneiden von Elektrodenfolien (1), die für einen Einsatz in einer Batteriezelle vorgesehen sind, zumindest umfassend eine Düse (5) mit einem Auslass (6), ein Schneidwerkzeug (7), eine Schwingungseinrichtung (8) zur Anregung zumindest des Schneidwerkzeugs (7) zu Schwingungen (14), eine Partikelzuleitung (9) zur Zuleitung zumindest von Partikeln (13), eine Gaszuleitung (10) zur Zuleitung eines ersten Gasstroms (12), wobei die Partikel (13) und der erste Gasstrom (12) in der Schneidvorrichtung (4) zu einem Partikelstrom (2) mischbar und über die Düse (5) dem Auslass (6) zuführbar sind, wobei das Schneidwerkzeug (7) und der Auslass (5) über der Elektrodenfolie (1) in einem Abstand (11) zu einer Oberfläche (3) der Elektrodenfolie (1) anordenbar und die Elektrodenfolie (1) zumindest durch den Partikelstrom (2) und durch die Schwingungen (14) des Schneidwerkzeugs (7) trennbar ist.
